# EUROPÄISCHE PATENTANMELDUNG

(11) **EP 2 322 939 A1**
(43) Veröffentlichungstag der Anmeldung: **18.05.2011**
(21) Anmeldenummer: 09176148.6
(22) Anmeldetag: 16.11.2009
(51) Int. Cl.: G01N 35/02

(54) **Analysesystem und Analyseverfahren**

(71) Anmelder: BIT Analytical Instruments GmbH, 65824 Schwalbach (DE)
(72) Erfinder: Balger, Marius, 65193, Wiesbaden (DE); Lang, Alfred, 82386, Oberhausen (DE)
(74) Vertreter: Staudt, Armin Walter

(57) **Zusammenfassung**

Ein bekanntes Analysesystem zur Bestimmung von Proben umfasst eine Aufnahmevorrichtung für mindestens ein Probengefäß, einen Reagenzienträger zur Aufnahme von mindestens einem Reagenzbehälter, eine Pipettiervorrichtung, die mittels einer Hub-/Schwenkeinrichtung bewegbar ist, eine Messeinrichtung zur Bestimmung einer physikalischen Eigenschaft der Probe in einer Messküvette, und eine Steuereinheit zur Steuerung der Antriebe von Reagenzienträger und Hub-/Schwenkeinrichtung sowie zur Steuerung des Betriebs der Pipettiervorrichtung und der Messeinrichtung. Um hiervon ausgehend ein Analysesystem für die medizinische Analytik bereitzustellen, mittels dem variable Einzel- oder Mehrprobenprofile sowohl klinisch-chemischer als auch immunologischer Proben schnell ausgeführt werden können, und das sich durch hohe Kompaktheit, einfache Bedienung sowie niedrige Gerätekosten auszeichnet, wird erfindungsgemäß vorgeschlagen, dass mehrere, verschlossene Reagenzbehälter in einer Reagenzienkassette modulartig zusammengefasst sind, wobei Reagenzbehälter zur Aufnahme von Reagenzien für die Bestimmung klinisch-chemischer Parameter und für die Bestimmung immundiagnostischer Parameter vorgesehen sind, dass der Reagenzienträger eine Vielzahl von Aufnahmen aufweist, in die jeweils eine Reagenzienkassette einsetzbar ist, und dass jeder Reagenzienkassette eine Messküvette zugeordnet ist, und dass die Messeinrichtung eine optische Messeinheit umfasst, die für eine analytische Bestimmung jeder der Messküvetten verwendbar ist.

## Beschreibung

Die Erfindung betrifft ein Analysesystem zur Bestimmung von Proben, insbesondere im medizinischen Bereich, mit einer Aufnahmevorrichtung für mindestens ein Probengefäß zur Aufnahme der Probe, einem Reagenzienträger zur Aufnahme von mindestens einem Reagenzbehälter mit einem darin enthaltenen testspezifischen Reagenz, einer Pipettiervorrichtung, die mittels einer Hub-/Schwenkeinrichtung bewegbar ist, einer Waschstation für die Pipettiervorrichtung, einer Messeinrichtung zur Bestimmung einer physikalischen Eigenschaft der Probe in einer Messküvette, und einer Steuereinheit zur Steuerung der Antriebe von Reagenzienträger und Hub-/Schwenkeinrichtung sowie zur Steuerung des Betriebs der Pipettiervorrichtung und der Messeinrichtung.

Weiterhin betrifft die Erfindung ein Verfahren zur automatisierten Analyse einer Probe, insbesondere im medizinischen Bereich, indem die zu bestimmende, in einem Probengefäß bereitgestellte Probe mittels einer Pipettiervorrichtung, die über eine Hub-/Schwenkeinrichtung bewegt wird, einem Reaktionsbehälter und/oder einer Messküvette zugeführt wird, welche in einem Reagenzienträger zusammen mit mindestens einem Reagenzbehälter mit einem darin enthaltenen Reagenz bereitgestellt, und anschließend in einer Messküvette nach Durchführung einer testspezifischen Abfolge von Analyseschritten unter Einsatz des mindestens einen Reagenzes einer Messeinrichtung zur Bestimmung einer physikalischen Eigenschaft der Probe zugeführt wird.

### Stand der Technik

Die klinischen Diagnostik umfasst biochemische Analysen, die auf Enzymreaktionen und anderen chemischen Reaktionen zum Analysieren von Zuckern, Fetten, Proteinen und dergleichen beruhen, sowie immunchemische Analysen, die spezifische Wechselwirkungen zwischen Antigenen und Antikörpern voraussetzen, um Hormone, Tumormarker und dergleichen zu detektieren.

Sowohl für Analysen im Bereich der klinisch-chemischen Diagnose als auch für immunlogischen Diagnosemethoden stehen automatische Analyseeinrichtungen zur Verfügung. Diese unterschieden sich wegen der jeweils grundsätzlich unterschiedlichen Analysemethoden deutlich voneinander.

So sind für den Bereich der klinischen Chemie nass-chemische Analysensysteme weit verbreitet, bei denen flüssige Reagenzien in Reagenzienbehältern bereitgestellt werden, die in Aufnahmen eines drehbaren Reagenzienrotors aufgenommen sind. Die zu analysierenden Proben sind in Probenröhrchen eines Probenrotors enthalten. Dem Reagenzienrotor ist ein Reagenzpipettor zugeordnet und dem Probenrotor ein Probenpipettor. Ein weiterer Rotor, ein Reagenzienrotor, ist mit Reaktions- oder Messküvetten bestückt.

Bei den nasschemischen Analyseeinrichtungen wird mittels des Reagenzpipettors das analysespezifische Reagenz aus einem der Reagenzienbehälter in einer vorgegebener Menge entnommen und in eine Reaktions- oder Messküvette gefüllt, woraufhin der Probenpipettor eine vorgegebene Menge der Probe entnimmt und der mit dem Reagenz befüllten Mess- oder Reaktionsküvette zuführt. Die auf diese Weise mit einem Reagenz und der Probe beschickte Mess- oder Reaktionsküvette wird mittels des Reagenzienrotors zu einer Messstation verfahren, wo beispielsweise eine photometrische Messung der Reaktionslösung durchgeführt wird, die anschließend ausgewertet wird.

Nasschemische Analyseeinrichtungen sind in der Regel für ein hohes Analyseaufkommen ausgelegt, insbesondere auch wegen der nur begrenzten Haltbarkeit der eingesetzten Reagenzien.

Für immunlogische Diagnosemethoden sind Analysesysteme gebräuchlich, die mit Standardformaten arbeiten, bei denen Reagenzbehälter (so genannte "wells") eingesetzt werden, die innen mit Antikörpern beschichtet sind. Da die biochemische Reaktion nur an der beschichteten Oberfläche stattfindet und nicht abreagiertes Material weggewaschen wird, ist die gundsätzliche Prozesssteuerung unterschiedlich zu den klinisch chemischen Tests.

Da bei der klinischen Chemie nur die flüssigen Reagenzien bestimmend für den Test sind, während bei den immunologischen Assays ein speziell beschichteter Reagenzbehälter (well) benötigt wird und auch die optischen Meßverfahren im Allgemeinen eine unterschiedliche Ausprägung haben, wurden bisher separate Analyseeinrichtungen für die klinisch-chemische Diagnose einerseits und für die immunlogischen Diagnosemethoden andererseits eingesetzt. Ein kombiniertes Analysesystem wurde erstmals in der EP 1 662 261 A1 vorgeschlagen. Darin wird ein modular aufgebautes Analysesystem beschrieben, bestehend aus einer Zentraleinheit, die für mehrere Analysemodule zuständig ist, die beispielsweise für immunologische, molekulare oder klinisch-chemische Analysen ausgelegt sind. Die zu untersuchenden Proben werden in Probengefäßen in die Zentraleinheit übergeben, wo mittels einer Pipettiereinheit jeweils eine vorgegebene Probenmenge entnommen und in ein Reaktionsgefäß abgefüllt wird. Die Reaktionsgefäße werden an eine unidirektionale Transporteinrichtung übergeben, bei der es sich Beispiel um ein Förderband, eine Schüttelstrecke oder um Führungsschienen mit Mitnahmeriemen handelt. Je nach Bestimmung des Reaktionsgefäßes wird dieses mittels der Transporteinrichtung in das passende Analysemodul eingeschleust, in der das Reaktionsgefäß für eine Analyse vorbereitet wird. Die Vorbereitung besteht zum Beispiel darin, dass ein oder mehrere Reagenzien zur Auslösung einer Reaktion in das jeweilige Reaktionsgefäß eingebracht werden. Zur Erfassung der physikalischen und/oder chemischen Eigenschaften der im jeweiligen Reaktionsgefäß vorhandenen Probe sind in jedem Analysemodul eine oder mehrere Messeinheiten vorgesehen, mittels denen Eigenschaften der Probe, wie etwa Absorption bei einer oder mehreren Lichtwellenlängen; Trübung oder Fluoreszenzemission gemessen werden.

Mit diesem Analysesystem wurde die Möglichkeit eröffnet, klinisch chemische und immunologische Diagnosemethoden in einem gemeinsamen Laborarbeitsplatz zu vereinen. Das Analysesystem weist einen zentralen Probeneingang und -ausgang auf, und bewirkt insoweit eine gewisse Vereinfachung. Jedoch handelt es sich ansonsten lediglich um eine sequentielle Kopplung klinisch-chemischer und immunologischer Module, die voneinander unabhängig in einem einzigen Analysegerät zusammengefasst sind. Der apparative Aufwand für Medienversorgung, Mess-, Heiz- oder Spüleinheiten sowie für Software zur Steuerung und Auswertung wird dadurch kaum verringert. Auch die Geräteabmessungen entsprechen denen, wie sie auch sonst für klinische Laboranalysesysteme typisch sind.

In jüngster Zeit zeigt sich jedoch ein erhöhter Bedarf nach mobilen Analysesytemen, die eine schnelle Diagnose in kleinen Laboreinheiten, direkt am Patientenbett oder in Arztpraxen ermöglichen. Aufwändige und fehleranfällige Vorgänge im Rahmen des Lagerns und Auslieferns von Proben zu einem zentralen Testlabor können so vermieden werden, und die Testergebnisse stehen zur sofortigen Therapieentscheidung zur Verfügung. An derartige Analysesysteme, die auch als POC (Point-Of-Care)-Systeme bezeichnet werden, werden zunehmend höhere Anforderungen an Kompaktheit, einfache Bedienung und Wartung sowie an die Schnelligkeit und Exaktheit der Messergebnisse gestellt.

### Technische Aufgabe

Der Erfindung liegt daher die Aufgabe zugrunde, ein Analysesystem - insbesondere für die medizinische Analytik - bereitzustellen, mittels dem variable Einzel- oder Mehrprobenprofile sowohl klinisch-chemischer als auch immunologischer Proben schnell ausgeführt werden können, und das sich durch hohe Kompaktheit, einfache Bedienung sowie niedrige Gerätekosten auszeichnet.

Weiterhin liegt der Erfindung die Aufgabe zugrunde, ein Analyseverfahren anzugeben, das eine schnelle und exakte Analyse sowohl klinisch-chemischer als auch immunologischer Proben gestattet.

Hinsichtlich des Analysesystems wird diese Aufgabe ausgehend von einem Analysesystem der eingangs genannten Gattung erfindungsgemäß dadurch gelöst,
(a) dass mehrere, verschlossene Reagenzbehälter in einer Reagenzienkassette modulartig zusammengefasst sind, wobei Reagenzbehälter zur Aufnahme von Reagenzien für die Bestimmung klinisch-chemischer Parameter und für die Bestimmung immundiagnostischer Parameter vorgesehen sind,
(b) dass der Reagenzienträger eine Vielzahl von Aufnahmen aufweist, in die jeweils eine Reagenzienkassette einsetzbar ist, wobei jeder Reagenzienkassette eine Messküvette zugeordnet ist, und
(c) dass die Messeinrichtung eine optische Messeinheit umfasst, die für eine analytische Bestimmung jeder der Messküvetten verwendbar ist.

Das erfindungsgemäße Analysesystem umfasst ein Analysegerät und Reagenzienkassetten. In jeder Reagenzienkassette sind mehrere Reagenzienbehälter, in denen die testspezifischen Reagenzien zur Verfügung gestellt werden, modulartig zusammengefasst. Die Reagenzienbehälter sind verschlossen und werden erst unmittelbar vor der Entnahme des Reagenz geöffnet, beispielsweise durch Einstechen eines Verschlussdeckels oder eines Ventils mittels der Pipettennadel der Pipettiervorrichtung. Die Menge an Reagenz ist für nur einen Test ausgelegt, so dass das Öffnen des Behälters in der Regel irreversibel ist. Nach Abschluss der Bestimmung wird die Reagenzienkassette beziehungsweise werden die Reagenzienkassetten entfernt. Probleme der Entnahme, Handhabung und Haltbarkeit der Reagenzien, wie sie mit größeren Reagenzien-Vorratsgefäßen verbunden sind, entfallen dadurch und es ergibt sich ein vergleichsweise geringer Platzbedarf. Dies trägt zur Kompaktheit und Bedienungsfreundlichkeit des erfindungsgemäßen Analysesystems bei.

Wesentlich dabei ist, dass das Analysesystem sowohl Reagenzienkassetten beinhaltet, die für die Bestimmung klinisch-chemischer Parameter vorgesehen sind, als auch Reagenzienkassetten, die für die Bestimmung immundiagnostischer Parameter ausgelegt sind. Dadurch gelingt die Bestimmung von Parametern aus verschiedenen Bereichen der Laboratoriumsmedizin in einem einfachen Analysegerät.

Dazu trägt bei, dass jeder Reagenzienkassette eine eigene Messküvette mechanisch oder logisch zugeordnet ist. Die Messküvette ist Teil der Reagenzienkassette oder sie stellt eine separate Komponente innerhalb des Reagenzienträgers dar. Im zuerst genannten Fall handelt es sich um eine Einweg-Messküvette, die zusammen mit der Reagenzienkassette eingesetzt und entfernt wird. Im zuletzt genannten Fall kann es sich auch um eine mehrfach benutzbare Messküvette handeln.

Da somit jede Bestimmung in einer eigenen Messküvette erfolgt, und alle Messküvetten nur einem Reagenzienträger zugeordnet und mittels diesem zur Messeinheit transportierbar sind, können klinische und immunologische Bestimmungen parallel angesetzt und in einem kleinen, kompakten Analysegerät nacheinander ausgeführt werden. Wichtig ist in dem Zusammenhang, dass die Messeinrichtung eine optische Messeinheit umfasst, die für eine analytische Bestimmung jeder der Messküvetten verwendbar ist.

Alle Messküvetten können der optischen Messeinheit zugeführt werden, und somit sind alle Proben mittels ein- und desselben optischen Messsystems analysierbar. Dadurch entfällt die Notwendigkeit, mehrere Messsysteme für die unterschiedlichen Messmethoden bereitstellen zu müssen, was sich auf die Kompaktheit, Mobilität, Bedien- und Wartungsfreundlichkeit sowie den Preis des Analysesystems vorteilhaft auswirkt.

Die Reagenzienkassetten enthalten die Reagenzienbehälter und optional Funktionsflüssigkeiten, wie Puffer-, Kalibrier-, Qualitätskontroll-, Spül-, Desinfektions- oder Reinigungsflüssigkeiten.

Das erfindungsgemäße Analysegerät ist autark und kann beispielsweise zur dezentralen Bestimmung von POC-Parametern in Serum, Plasma oder Urin aus verschiedenen Bereichen der In-Vitro-Diagnostik eingesetzt werden, wie beispielsweise zur Bestimmung von Metaboliten (Glukose, Laktat), Bilirubin, sowie zum Nachweis von Entzündungsparametern, Impfstatus, Schwangerschaft, Infektionserkrankungen, Allergien, viralen Erkrankungen, Autoimmunerkrankungen, Karzinomen, Diabetes, Alkoholismus und Schildrüsenfunktion.

Das universell einsetzbare Analysesystem erlaubt es, den für jeden Patienten individuell notwendigen Umfang an Untersuchungen schnell und exakt durchzuführen und ermöglicht so ein frühzeitiges Einleiten therapeutischer Maßnahmen oder prophylaktische Interventionen.

Da alle notwendigen spezifischen Testmaterialien in der Reagenzienkassette vorliegen, und deren Mengen auf einen einzigen Test abgestimmt sind, kann das erfindungsgemäße Analysegerät eine hohe Anzahl unterschiedlicher Tests gleichzeitig oder nacheinander durchführen ohne dass hierfür eine Umbestückung anderer Behälter notwendig ist. Da die Reagenzien bestimmungsgemäß unmittelbar nach dem Einsetzen der Reagenzienkassette in das Analysegerät verbraucht werden und sich daher nur für kurze Zeit im Gerät befinden, ist eine Kühlung der Kassetten nicht erforderlich. Dies trägt zur Kompaktheit und zur einfachen Bedienung bei.

Insbesondere im Hinblick auf eine kompakte und vielseitig einsetzbaren Einsatz des Analysesystems hat es sich als vorteilhaft erwiesen, wenn die Messküvette gleichzeitig als Reaktionsbehälter eingesetzt wird, in dem Reaktionen für die Bestimmung klinisch-chemischer Parameter und/oder für die Bestimmung immundiagnostischer Parameter ablaufen.

Somit wird eine Messküvette verwendet, in der entweder ausschließlich gemessen wird oder in der zusätzlich auch chemische Reaktionen ablaufen können.

Vorzugsweise ist der Reagenzienträger als um eine Mittelachse rotierbarer Rotor ausgebildet, wobei sich die Aufnahmen für die Reagenzienkassetten in radialer Richtung erstrecken.

Der Transport der Messküvetten zu der optischen Messeinrichtung erfolgt hierbei durch Rotation des rotorförmigen Reagenzienträgers um eine zentrale Drehachse. Die radiale Erstreckung der Reagenzienkassetten erlaubt eine Unterbringung der Reagenzienkassetten auf möglichst engem Raum. Beides trägt zu einer kompakten Bauweise des Analysesystems bei. Die Rotorform umfasst ringförmige und scheibenförmige Ausführungen.

Es hat sich als günstig erwiesen, wenn die Reagenzbehälter und die Messküvette in linearer Anordnung in jeweils einer der Aufnahmen des Reagenzienträgers zusammengefasst sind, wobei die Messküvette im Bereich einer Außenseite des Reagenzienträgers angeordnet ist.

Bei einem scheibenförmigen Reagenzienträger liegt die Messküvette beziehungsweise liegen die Messküvetten im Bereich der äußeren Zylindermantelfläche, bei einem ringförmigen Reagenzienträger im Bereich der inneren oder der äußeren Zylindermantelfläche. Dementsprechend ist das optische Messsystem angeordnet, wobei der Messstrahl die Messküvette im Allgemeinen seitlich durchstrahlt.

Es hat sich bewährt, wenn mindestens jeweils drei Reagenzbehälter in einer Reagenzienkassette zusammengefasst sind.

Eine Mindestanzahl von drei Reagenzbehältern ist vorteilhaft, weil viele Bestimmungen eine entsprechende Anzahl an Reagenzien oder anderen Funktionsflüssigkeiten erfordern. Diese Bestimmungen könnten bei weniger als drei Reagenzien nicht durchgeführt werden, oder sie müssten in zwei oder mehr Reagenzienkassetten untergebracht werden, was einen höheren Aufwand an Programmierung und Sorgfalt erfordert.

Es wird eine Ausführungsform des Analysesystems bevorzugt, bei der die Reagenzienkassette einen Reaktionsbehälter umfasst, der mit einem testspezifischen, vorformulierten Systemreagenz vorbefüllt ist.

Hierbei weist die Reagenzienkassette zusätzlich zu den mit Reagenzien gefüllten Reagenzbehältern mindestens einen Reaktionsbehälter auf, der mit einem testspezifischen Systemreagenz vorbefüllt ist. Das Systemreagenz liegt dabei in flüssiger oder in fester Form vor, insbesondere auch als Innenbeschichtung des Reaktionsbehälters. Die für den spezifischen Test erforderlichen Reaktions- und Pipettierschritte werden dabei nicht in der Messküvette, sondern im Reaktionsbehälter ausgeführt. Zur Durchführung der Messung wird vom Reaktionsbehälter in die Messküvette umpipettiert. Derartige Reagenzienkassetten sind insbesondere für immunologische Bestimmungen geeignet.

Die Messküvette ist vorzugsweise unabhängig von der Reagenzkassette. Bei einer mechanisch mit der Reagenzienkassette verbundenen Messküvette ergibt sich zwar eine einfachere Bestückung des Analysegeräts. Bei einer nicht mechanisch an die Reagenzkassette gebunden Messküvette ergeben sich jedoch größere Freiheiten bei der Produktion der Reagenzkassette, da die Messküvette im Befüllungsprozess nicht stört. Sofern die Messküvette für eine mehrfache Benutzung ausgelegt wird, ist ein Vorteil bei der Bestückung gegeben, jedoch mit dem Nachteil, dass diese sehr gut gewaschen werden muss.

Die Reagenzbehälter können aus flexiblem Material bestehen und beispielsweise in Form von Beuteln ausgeführt sein, die in Umhüllungen aus biegesteifem Werkstoff eingelegt sind. Vorzugsweise bestehen die Reagenzbehälter jedoch aus einem biegesteifen Kunststoff und sind mit einer Folie vakuumdicht verschlossen, die zur Entnahme der Reagenzien mittels der Pipettennadel aufgestoßen wird.

Die Reagenzienkassetten sind hierbei preiswert herstellbar, beispielsweise als Extrusionsspritz- oder Extrusionsblasteile.

Die Messküvette weist bevorzugt planparallele Stirnseiten auf, die als Einstrahlflächen für einen Messstrahl der optischen Messeinheit dienen.

Die Messküvette wird hierbei seitlich durchstrahlt. Dadurch werden Probleme hinsichtlich Justage und Füllstand vermieden, die sich bei einer Durchstrahlung in Richtung der Küvetten-Längsachse ergeben und die zu ungenauen Messergebnissen führen können. Diese Maßnahme trägt somit zur Verlässlichkeit des Messergebnisses und zu einem geringeren Wartungsaufwand bei.

Hinsichtlich des Analyseverfahrens wird die oben angegebene Aufgabe ausgehend von dem Verfahren der eingangs genannten Gattung erfindungsgemäß dadurch gelöst,
(a) dass ein Reagenzienträger eingesetzt wird, der eine Vielzahl von Aufnahmen aufweist, in die mindestens eine Reagenzienkassette eingesetzt wird, in der mehrere Reagenzbehälter zur Aufnahme von Reagenzien für die Bestimmung entweder klinisch-chemischer Parameter und für die Bestimmung immundiagnostischer Parameter modulartig zusammengefasst sind, wobei jeder Reagenzienkassette eine Messküvette zugeordnet ist,
(b) dass ein klinisch-chemischer Parameter mittels der Messküvette bestimmt wird, die der Reagenzienkassette zugeordnet ist, die zum Durchführen der Analyse des klinisch-chemischen Parameters vorgesehen ist, und/oder
(c) dass ein immundiagnostische Parameter mittels der Messküvette bestimmt wird, die der Reagenzienkassette zugeordnet ist, die zum Durchführen der Analyse des immundiagnostischen Parameters vorgesehen ist,
(d) wobei jede der Messküvetten der Messeinrichtung zugeführt wird, die eine optische Messeinheit umfasst, die für die jeweilige analytische Parameterbestimmung verwendet wird.

Beim erfindungsgemäßen Verfahren werden die testspezifischen Reagenzien in Reagenzbehältern zur Verfügung gestellt, die modulartig in einer Reagenzienkassette zusammengefasst sind. Die Reagenzienbehälter sind verschlossen und werden erst unmittelbar vor der Entnahme des Reagenz geöffnet, beispielsweise durch Einstechen eines Verschlussdeckels oder eines Ventils mittels der Pipettennadel der Pipettiervorrichtung. Die Menge an Reagenz ist für nur einen Test ausgelegt, so dass das Öffnen des Behälters in der Regel irreversibel ist. Nach Abschluss der Bestimmung wird die Reagenzienkassette beziehungsweise werden die Reagenzienkassetten entfernt. Probleme der Entnahme, Handhabung und Haltbarkeit der Reagenzien, wie sie mit größeren Reagenzien-Vorratsgefäßen verbunden sind, entfallen dadurch.

Wesentlich ist, dass das Analysesystem sowohl Reagenzienkassetten beinhaltet, die für die Bestimmung klinisch-chemischer Parameter vorgesehen sind, als auch Reagenzienkassetten, die für die Bestimmung immundiagnostischer Parameter ausgelegt sind, so dass Parameter aus verschiedenen Bereichen der Laboratoriumsmedizin bestimmbar sind.

Jeder Reagenzienkassette ist eine eigene Messküvette mechanisch oder logisch zugeordnet. Die Messküvette ist Teil der Reagenzienkassette oder sie stellt eine separate Komponente dar. Im zuerst genannten Fall handelt es sich um eine Einweg-Messküvette, die zusammen mit der Reagenzienkassette eingesetzt und entfernt wird. Im zuletzt genannten Fall kann es sich auch um eine mehrfach benutzbare Messküvette handeln.

Die Bestimmung des klinisch-chemischen Parameters erfolgt mittels derjenigen Messküvette, die der Reagenzienkassette zugeordnet ist, die zum Durchführen der Analyse des klinisch-chemischen Parameters vorgesehen ist, und umgekehrt erfolgt die Bestimmung des immundiagnostischen Parameters mittels derjenigen Messküvette, die der Reagenzienkassette zugeordnet ist, die zum Durchführen der Analyse des immundiagnostischen Parameters vorgesehen ist. Da somit jede Bestimmung in einer eigenen Messküvette erfolgt, können mehrere Bestimmungen parallel angesetzt und nacheinander zur Messeinrichtung transportiert werden.

Alle im Reagenzienträger aufgenommenen Messküvetten werden ein und derselben optischen Messeinheit zugeführt und sind mittels dieser analysierbar, unabhängig davon, ob es sich um die Bestimmung eines klinisch-chemischen Parameters oder um die Bestimmung eines immundiagnostischen Parameters handelt.

Die Reagenzienkassetten enthalten die Reagenzienbehälter und optional Funktionsflüssigkeiten, wie Puffer-, Kalibrier-, Qualitätskontroll-, Spül-, Desinfektions- oder Reinigungsflüssigkeiten.

Das Analyseverfahren ist insbesondere mittels des oben erläuterten erfindungsgemäßen portablen Analysegeräts ausführbar und dient beispielsweise zur dezentralen Bestimmung von POC-Parametern in Urin-, Plasma- oder Vollblutproben aus verschiedenen Bereichen der Labormedizin. Auf diese Weise sind für jeden Patienten die individuell notwendigen Untersuchungen schnell und exakt durchführbar, was ein frühzeitiges Einleiten therapeutischer Maßnahmen oder prophylaktische Interventionen ermöglicht.

Das Bestimmen des klinisch-chemischen Parameters umfasst im einfachsten Fall folgende Verfahrensschritte:
aa) Aufnehmen der Probe und eines ersten Reagenzes mittels der Pipettiervorrichtung,
bb) Abgeben des ersten Reagenzes und der Probe aus der Pipettiervorrichtung in die Messküvette,
cc) Inkubieren des ersten Reagenzes mit der Probe, wobei das erste Reagenz mit dem in der Probe vorhandenen und nachzuweisenden klinisch-chemischen Parameter zu einem mittels der Messeinrichtung photometrisch nachweisbaren Produkt reagiert.

Zur Bestimmung von immundiagnostischen Parametern wird vorzugsweise eine Reagenzienkassette eingesetzt, die einen Reaktionsbehälter aufweist, der mit einem testspezifischen, vorformulierten Systemreagenz als Festphase vorbefüllt ist.

Ausgehend hiervon umfasst die Bestimmung beispielsweise folgende Verfahrensschritte:
aa) Aufnehmen der Probe und eines Konjugats mittels der Pipettiervorrichtung,
bb) Abgeben von Konjugat und Probe aus der Pipettiervorrichtung auf eine Festphase einer der Reagenzbehälter der Reagenzienkassette,
cc) Inkubieren der Festphase mit Konjugat und Probe,
dd) Entfernen überschüssigen Konjugats und Probe durch Waschen der Festphase,
ee) Aufnehmen von Substrat aus einem zweiten Reagenzbehälter mittels der Pipettiervorrichtung,
ff) Abgeben des Substrats aus der Pipettiervorrichtung auf die Festphase,
gg) Inkubieren des Substrates auf der Festphase,
hh) Aufnehmen des umgesetzten Substrats durch die Pipettiervorrichtung,
ii) Abgeben des umgesetzten Substrates aus der Pipettiervorrichtung in die Messküvette,
jj) Messen der Konzentration des umgesetzten Substrates mit Hilfe der Messeinrichtung

In dem Zusammenhang wird eine Verfahrensweise bevorzugt, bei der die Bestimmung immundiagnostischer Parameter ein Umpipettieren von einem Reaktionsbehälter in die Messküvette umfasst, wodurch eine im Reaktionsbehälter ablaufende Reaktion unmittelbar gestoppt wird.

Durch das Umpipettieren in die Messküvette wird die im Reaktionsbehälter ablaufende Reaktion zu einem definierten Zeitpunkt gestoppt, ohne dass Stoppreagenzien eingesetzt werden müssen. Diese können dadurch eingespart werden, und es ergibt sich eine höhere Messgenauigkeit.

Sowohl die Bestimmung des klinisch-chemischen Parameters als die Bestimmung des immundiagnostischen Parameters erfolgt durch fotometrische Messung der Probe in der der jeweiligen Reagenzienkassette zugeordneten Messküvette.

Weitere vorteilhafte Ausgestaltungen des erfindungsgemäßen Verfahrens ergeben sich aus den Unteransprüchen. Soweit in den Unteransprüchen angegebene Ausgestaltungen des Analyseverfahrens den in Unteransprüchen zur erfindungsgemäßen Analysevorrichtung genannten Ausführungsformen nachgebildet sind, wird zur ergänzenden Erläuterung auf die obigen Ausführungen zu den entsprechenden Vorrichtungsansprüchen verwiesen.

### Ausführungsbeispiel

Die Erfindung wird nachfolgend anhand von Ausführungsbeispielen und einer Zeichnung näher erläutert. In der Zeichnung zeigt:
- **Figur 1**: eine Ausführungsform des erfindungsgemäßen Analysesystems mit einem Analysegerät und Reagenzienkassetten in dreidimensionaler Ansicht (oh- ne Gehäuse),
- **Figur 2**: eine Draufsicht auf das Analysegerät in schematischer Darstellung,
- **Figur 3**: eine Reagenzienkassette zum Einsatz im erfindungsgemäßen Analyse- system in einer Seitenansicht und
- **Figur 4**: eine Messküvette zum Einsatz im erfindungsgemäßen Analysesystem in dreidimensionaler Ansicht.

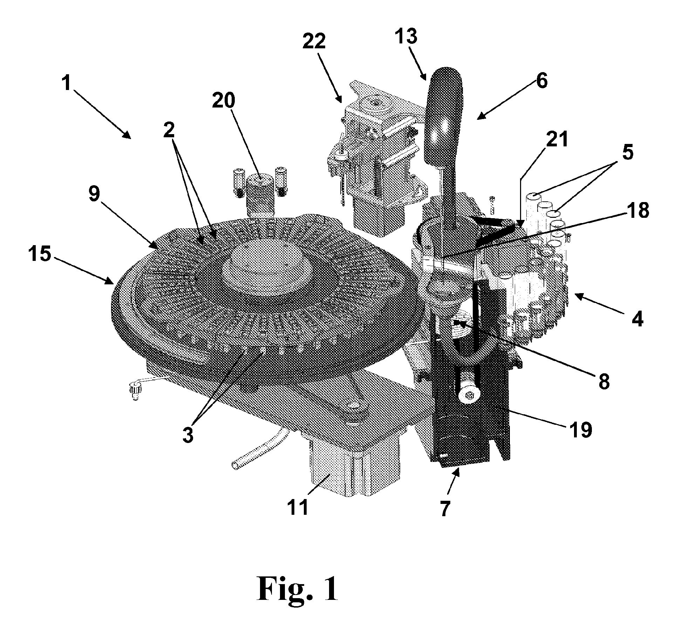

Das in Figur 1 gezeigte Analysesystem für die medizinische Analytik umfasst ein Analysegerät 1, eine Vielzahl von Reagenzienkassetten 2 und eine Vielzahl von Messküvetten 3.

Die wesentlichen Bauteile des Analysegerätes 1 sind ein optional beheizbarer Reagenzienrotor 15, ein Aufnahmeteil 4 für Probengefäße 5, eine Pipettiereinrichtung 6, die mit einer Hub-/Schwenkeinrichtung 7 verbunden ist die einen Pipettierarm 13 und ein als Pipettennadel 18 zugespitztes Stahlrohr aufweist, eine Waschstation 8 für die Pipettennadel 18, eine fotometrische Messeinheit 20 mit Detektor, die unterhalb des Reagenzienrotors 15 angeordnet ist, sowie ein oberhalb des Reagenzienrotors 15 angeordneter Scanner zur Identifikation der Reagenzienkassetten 2. Zur Steuerung der motorgetriebenen Bewegungen von Reagenzienrotor 15, Pipettiereinrichtung 6, Hub-/Schwenkeinrichtung 7 sowie für die Probenerkennung, Durchführung und Auswertung der fotometrischen Messung ist eine zentrale Steuereinheit vorgesehen, die innerhalb des Gehäuses des Analysegerätes angeordnet ist.

Der Reagenzienrotor 15 umfasst einen Aufnahmering 9, der um eine vertikal orientierte Rotationsachse rotierbar ist, und der vierzig spaltförmige Öffnungen) zur Aufnahme von Reagenzienkassetten 2 aufweist. Die schlitzförmigen Öffnungen sind in der Darstellung von Figur 1 wegen der darin eingesetzten Reagenzkassetten 2 belegt und nicht erkennbar

Der Aufnahmering 9 wird mittels gesteuerten Schrittmotors 11 angetrieben. Die Öffnungen des Reagenzienrotors 15 erstrecken sich vom Kreisumfang radial nach innen. Die Öffnungen weisen zusätzlich zu der Aufnahme für die Reagenzienkassette 2 jeweils eine Aufnahmeposition für eine Messküvette 3 auf.

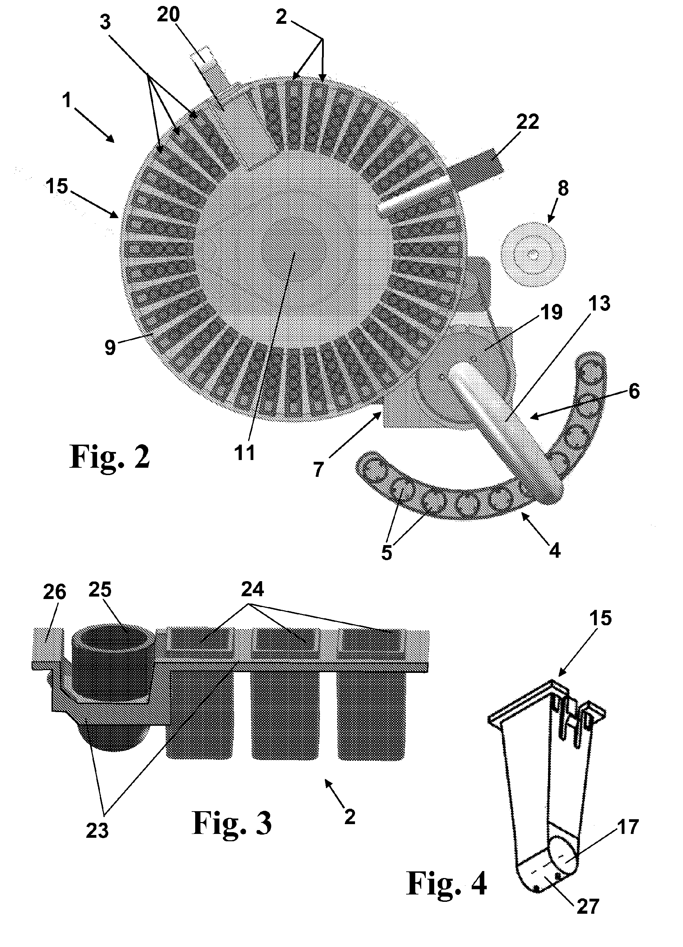

Die Reagenzienkassetten 2 umfassen vier Reagenzbehälter 24, 25 (siehe Figur 3) aus einem biegesteifen Kunststoff, die in einer Reihe angeordnet und miteinander verbunden sind. In einer Reihe mit einer Reagenzienkassette 2 ist jeweils eine Messküvette 3 an der Zylinderaußenmantelfläche des Reagenzienrotors 15 angeordnet. Die Länge der Messküvette 3 ist so bemessen, dass sie die Reagenzbehälter 24, 25 überragt, so das an dem überragenden Längenabschnitt die fotometrische Messung vorgenommen werden kann.

Im Aufnahmeteil 4 sind die Probengefäße 5 auf einer Teilkreisbahn angeordnet, deren Mittelpunkt von der Rotationsachse des Pipetierarms 13 gebildet wird.

Die Pipettenwaschstation 8 umfasst ein Waschgefäß mit Ablauf für eine Waschflüssigkeit. Mittels der Pipettenwaschstation 8 wird die Pipettennadel 18 vor jedem Analysevorgang gereinigt.

Die Hub-/Schwenkeinrichtung 7 umfasst ebenfalls einen Schrittmotor 19 sowie einen weiteren Schrittmotor 21, der eine Vertikalbewegung der Pipettiereinrichtung 6 ermöglicht. Mittels dieser Einrichtung ist die Pipettennadel 18 zwischen einer ersten Arbeitsposition auf Seite des Proben-Aufnahmeteils 4 und mehrerer Arbeitspositionen auf Seite des Reagenzienrotors 15 und einer weitere Arbeitsposition im Bereich der Waschstation 8 reversierend bewegbar. Dabei ist jeder Behälter 24; 25 der Reagenzienkassetten und die Messküvetten 3 durch Rotation des Reagenzienträgers 15 in den Arbeitsbereich der Pipettiernadel verfahrbar.

Mittels eines Scanners sind die mit einem individuellen Barcode versehenen Reagenzienkassetten 2 identifizierbar. Die Messküvetten 3 können unter Zuhilfenahme der optischen Einheit 20 in ihrer Qualität beurteilt werden.

Weiterhin ist eine Spüleinheit 22 vorgesehen, die dazu dient, einen beschichteten Reaktionsbehälter (25) zu waschen, um das Konjugat und das Probenmaterial zu entfernen, wie weiter unten noch näher erläutert wird.

Die in **Figur 3** gezeigte Ausführungsform der Reagenzienkassette 2 umfasst insgesamt vier Behälter 24; 25 zur Aufnahme von Reagenzien. Die Reagenzbehälter 24; 25 bestehen aus einem biegesteifen Kunststoff und sind nach oben offen. Im unbenutzten Zustand ist die Öffnung mit einer Folie verschlossen. Die Reagenzbehälter 24, 25 sind mittels Stegen 23 unlösbar miteinander verbunden. Das vordere, dem Zylinderaußenmantel des Reagenzienrotors 15 zugewandte Ende der Reagenzienkassette 2 ist mit einem Bügel 26 versehen, mittels dem die Reagenzienkassette 2 in eine der Öffnungen des Reagenzienrotors 3 eingeclipst werden kann.

Grundsätzlich sind alle Behälter 24; 25 für die Aufnahme flüssiger Reagenzien für Bestimmungen auf dem Gebiet der klinischen Chemie und der Immunologie einsetzbar. Der vordere Behält er 25 kann jedoch auch eine Innenbeschichtung mit einem Reagenz aufweisen und gleichzeitig als Reaktionsbehälter dienen. Die so ausgestatteten Reagenzienkassette 2 ist insbesondere für immunologische Bestimmungen ausgelegt.

Die in **Figur 4** gezeigte Messküvette 15 weist einen Rundboden 27 und zwei planparallele Seitenwände 17 auf, die bei der Messung vom Messstrahl des optischen Messsystems durchstrahlt werden. Es handelt sich um eine universell einsetzbare Messküvette, in der entweder ausschließlich gemessen wird oder in der zusätzlich auch chemische Reaktionen ablaufen können.

Bei der fotometrischen Messeinheit 20 handelt es sich um eine Meßeinheit, die im Durchstrahlverfahren Absorptionen bei zwölf unterschiedlichen Wellenlängen im Bereich zwischen 340nm und 800nm messen kann. Des Weiteren sind turbidimetrische Messungen im gleichen Wellenlängenbereich möglich. Die Messeinheit ist somit für fotometrische Messungen typischer Proben auf dem Gebiet der klinischen Chemie und der Immunologie einsetzbar.

Nachfolgend wird die Funktionsweise des erfindungsgemäßen Analysesystems und ein Ausführungsbeispiel für das erfindungsgemäße Verfahren anhand der Figuren 1 bis 4 näher erläutert.

Für eine Vollblutprobe sollen mehrere immunologische und klinisch-chemische Parameter untersucht werden.

Die Probe wird im Probengefäß 5 bereitgestellt und dieses in die Aufnahmevorrichtung 4 eingesetzt. Die zu bestimmenden Parameter werden mittels einer Tastatur eingegeben, woraufhin das Analysegerät 1 die dafür benötigten Reagenzienkassetten 2 anfordert, die zur Identifikation mit einem Barcode versehen sind. Sie werden zusammen mit jeweils einer Messküvette 3, in den Reagenzienrotor 15 eingesetzt.

Durch Rotation um die Rotationsachse des Reagenzienrotors 15 werden alle eingesetzten Reagenzienkassetten 2 unter den Scanner 13 geführt, die Informationen der Barcodes ausgelesen und der zentralen Steuereinheit übergeben.

Zur Durchführung einer immunologischen Analyse wird der Reagenzienrotor 15 beispielsweise mit einer Reagenzienkassette 2 bestückt, bei der einer der Reagenzienbehälter 25 an seiner Innenwandung mit einer Festphase beschichtet ist. Dieser Reagenzbehälter 25 dient gleichzeitig als Reaktionsbehälter. Ein weiterer der Reagenzbehälter 24 der Reagenzienkassette 2 enthält ein Reagenz mit einem zweiten Antikörper, und ein weiterer der Reagenzbehälter 24 enthält ein Substrat.

Die Hub-/Schwenkeinrichtung 7 fährt die Pipettiereinrichtung 6 aus ihrer Ruheposition zu der ersten Arbeitsposition, an die gleichzeitig das Probengefäß 5 transportiert wird. Die Pipettennadel 18 wird in die Probe eingetaucht und mittels einer (in den Figuren nicht dargestellten) Saugeinrichtung eine vorbestimmte Probenmenge eingesaugt, wobei die Steuerung dieses Ansaugprozesses durch die zentrale Steuereinheit erfolgt.

Daraufhin wird die Pipettennadel 18 angehoben und an ihre zweite Arbeitsposition im Bereich des Reagenzienrotors 15 verfahren, wobei gleichzeitig der Reagenzbehälter 25 durch Rotation des Reagenzienrotors 15 an diese Arbeitsposition bewegt wird. Beim Absenken der Pipettennadel 18 durchstößt diese eine Schutzfolie des Reagenzbehälters 25 und gibt die Probenmenge in den Reagenzbehälter 25 ab.

Die Pipettennadel 18 wird anschließend zur Waschstation 8 bewegt und von hinten mit Waschflüssigkeit gespült und somit gereinigt.

Nach testindividuellen Inkubationswartezeiten werden die abreagierten Reagenzien mit Hilfe der Spüleinheit 22 aus dem beschichteten Reaktionsbehälter 25 herausgewaschen. Danach werden nacheinander die Reagenzien aus den beiden anderen Reagenzienbehältern 24 mittels der Pipettiereinrichtung 6 entnommen und dem Reaktionsbehälter 25 zugeführt, wobei die Analyseschritte für den spezifischen Test in der zentralen Steuereinheit hinterlegt sind und softwaregesteuert nacheinander abgearbeitet werden.

Nach Abschluss der Reaktion wird die Probe aus dem Reaktionsbehälter 25 in die Messküvette 3 umpipettiert. Dadurch wird die im Reaktionsbehälter zuletzt ablaufende Reaktion unmittelbar gestoppt.

Der Reagenzienrotor 15 wird daraufhin rotiert, bis sich die Planseiten 17 der Messküvette 15 im Messstrahl der optischen Messeinheit 20 befinden. Dort erfolgt nun auf bekannte Weise die fotometrische Analyse des in der Messküvette 3 enthaltenden Gemischs aus Reagenz und Probe.

Die von der Messeinheit ermittelten Daten werden an die zentrale Steuereinheit weitergeleitet und ausgewertet. Das Messergebnis wird gespeichert und auf einem Display ausgegeben.

Zur Durchführung einer Bestimmung derselben Probe auf dem Gebiet der klinischen Chemie (Glukosebestimmung) wird der Reagenzienrotor 15 beispielsweise mit einer Reagenzienkassette 2 bestückt, bei der der vordere Reagenzienbehälter 25 eine Einheit ATP (Adenosin-5'-Triphosphat) enthält und der nachfolgende Reagenzbehälter 24 eine Einheit NAD+ (Nicotinamid-Adenin-Dinukleotid).

Probennahme, Waschvorgänge, fotometrische Messung, Auswertung und Ausgabe der Messergebnisse erfolgen in ähnlicher Weise wie oben anhand der immunologischen Bestimmung beschrieben, wobei das Waschen des beschichteten Reaktionsbehälters 25 entfällt und die Reaktion direkt in der Messküvette 3 abläuft.

Das mit Reagenz und Probe gefüllte Pipettierröhrchen wird zur zweiten Arbeitsposition im Bereich des Reagenzienrotors 15 verfahren, wobei gleichzeitig die Messküvette 3 durch Rotation des Reagenzienrotors 15 an diese Arbeitsposition bewegt wird. Die Pipettiernadel 18 gibt das Reagenz mit der Probe in die Messküvette 3 ab. Nach einer Inkubationswartezeit wird das zweite Reagenz aus dem Reagenzienbehälter 24 mittels der Pipettiereinrichtung 6 entnommen und dieses ebenfalls der Messküvette 4 zugeführt.

Nach Abschluss der Reaktion wird der Reagenzienrotor 15 soweit rotiert, dass sich die Planseiten 17 der Messküvette 15 im Messstrahl der optischen Messeinheit 20 befinden, so dass die fotometrische Analyse des in der Messküvette 3 enthaltenden Gemischs aus Reagenz und Probe erfolgen kann.

Die Menge an Reagenzien in den Reagenzienkassetten 2 ist jeweils für eine einzige Bestimmung ausgelegt. Die leeren Reagenzienkassette 2 und die Messküvetten 3 werden nach Abschluss des Analysevorgangs entfernt.

Auf entsprechende Art und Weise ermöglicht das erfindungsgemäße Analysesystem die gleichzeitige Bestimmung einer großen Vielzahl an klinisch chemischen und immunologischen Parametern für mehrere Messproben.

## Patentansprüche

1. Analysesystem zur Bestimmung von Proben, insbesondere im medizinischen Bereich, mit einer Aufnahmevorrichtung (4) für mindestens ein Probengefäß (5) zur Aufnahme der Probe, einem Reagenzienträger (15) zur Aufnahme von mindestens einem Reagenzbehälter (24; 25) mit einem darin enthaltenen testspezifischen Reagenz, einer Pipettiervorrichtung (6), die mittels einer Hub-/Schwenkeinrichtung (7) bewegbar ist, einer Waschstation (8) für die Pipettiervorrichtung (6), einer Messeinrichtung (20) zur Bestimmung einer physikalischen Eigenschaft der Probe in einer Messküvette (3), und einer Steuereinheit zur Steuerung der Antriebe von Reagenzienträger und Hub-/Schwenk-einrichtung sowie zur Steuerung des Betriebs der Pipettiervorrichtung (6) und der Messeinrichtung (20), **dadurch gekennzeichnet,**
(a) **dass** mehrere, verschlossene Reagenzbehälter (24; 25) in einer Reagenzienkassette (2) modulartig zusammengefasst sind, wobei Reagenzbehälter (24; 25) zur Aufnahme von Reagenzien für die Bestimmung klinisch-chemischer Parameter und für die Bestimmung immundiagnostischer Parameter vorgesehen sind,
(b) **dass** der Reagenzienträger (15) eine Vielzahl von Aufnahmen (14) aufweist, in die jeweils eine Reagenzienkassette (2) einsetzbar ist, wobei jeder Reagenzienkassette (2) eine Messküvette (3) zugeordnet ist, und
(c) **dass** die Messeinrichtung (20) eine optische Messeinheit umfasst, die für eine analytische Bestimmung jeder der Messküvetten (2) verwendbar ist.

2. Analysesystem nach Anspruch 1, **dadurch gekennzeichnet, dass** die Messküvette (2) als Reaktionsbehälter eingesetzt wird, in dem Reaktionen für die Bestimmung klinisch-chemischer Parameter und/oder für die Bestimmung immundiagnostischer Parameter ablaufen.

3. Analysesystem nach Anspruch 1 oder 2, **dadurch gekennzeichnet, dass** der Reagenzienträger (15) als um eine Mittelachse rotierbarer Rotor ausgebildet ist, wobei sich die Aufnahmen (14) für die Reagenzienkassetten (2) in radialer Richtung erstrecken.

4. Analysesystem nach einem der vorhergehenden Ansprüche, **dadurch gekennzeichnet, dass** die Reagenzbehälter (24; 25) und die Messküvette (3) in linearer Anordnung in jeweils einer der Aufnahmen (14) des Reagenzienträgers (15) zusammengefasst sind, wobei die Messküvette (2) im Bereich einer Außenseite des Reagenzienträgers (15) angeordnet ist.

5. Analysesystem nach einem der vorhergehenden Ansprüche, **dadurch gekennzeichnet, dass** mindestens jeweils drei Reagenzbehälter (24; 25) in einer Reagenzienkassette (2) zusammengefasst sind.

6. Analysesystem nach einem der vorhergehenden Ansprüche, **dadurch gekennzeichnet, dass** die Reagenzienkassette (2) einen Reaktionsbehälter (25) umfasst, der mit einem testspezifischen, vorformulierten Systemreagenz vorbefüllt ist.

7. Analysesystem nach einem der vorhergehenden Ansprüche, **dadurch gekennzeichnet, dass** die Messküvette (3) in die Reagenzienkassette (2) lösbar einsetzbar ist.

8. Analysesystem nach einem der vorhergehenden Ansprüche, **dadurch gekennzeichnet, dass** die Reagenzbehälter (24; 25) aus einem biegesteifen Kunststoff bestehen und mit einer Folie vakuumdicht verschlossen sind.

9. Analysesystem nach einem der vorhergehenden Ansprüche, **dadurch gekennzeichnet, dass** die Messküvette (3) planparallele Stirnseiten (17) aufweist, die als Einstrahlflächen für einen Messstrahl der optischen Messeinheit (20) dienen.

10. Verfahren zur automatisierten Analyse einer Probe, insbesondere im medizinischen Bereich, indem die zu bestimmende, in einem Probengefäß (5) bereitgestellte Probe mittels einer Pipettiervorrichtung (6), die über eine Hub-/Schwenkeinrichtung (7) bewegt wird, einem Reaktionsbehälter (25) und/oder einer Messküvette (3) zugeführt wird, welche in einem Reagenzienträger (15) zusammen mit mindestens einem Reagenzbehälter (24; 25) mit einem darin enthaltenen testspezifischen Reagenz bereitgestellt, und anschließend in der Messküvette (3) nach Durchführung einer testspezifischen Abfolge von Analyseschritten unter Einsatz des mindestens einen Reagenzes einer Messeinrichtung (20) zur Bestimmung einer physikalischen Eigenschaft der Probe zugeführt wird, **dadurch gekennzeichnet,**
(a) **dass** ein Reagenzienträger (15) eingesetzt wird, der eine Vielzahl von Aufnahmen (14) aufweist, in die mindestens eine Reagenzienkassette (2) eingesetzt wird, in der mehrere Reagenzbehälter (24; 25) zur Aufnahme von Reagenzien für die Bestimmung entweder klinisch-chemischer Parameter und für die Bestimmung immundiagnostischer Parameter modulartig zusammengefasst sind, wobei jeder Reagenzienkassette (2) eine Messküvette (3) zugeordnet ist.
(b) **dass** ein klinisch-chemischer Parameter mittels der Messküvette (3) bestimmt wird, die der Reagenzienkassette (2) zugeordnet ist, die zum Durchführen der Analyse des klinisch-chemischen Parameters vorgesehen ist, und/oder
(c) **dass** ein immundiagnostische Parameter mittels der Messküvette (3) bestimmt wird, die der Reagenzienkassette (2) zugeordnet ist, die zum Durchführen der Analyse des immundiagnostischen Parameters vorgesehen ist,
(d) wobei jede der Messküvetten (3) der Messeinrichtung (20) zugeführt wird, die eine optische Messeinheit umfasst, die für die jeweilige analytische Parameterbestimmung verwendet wird.

11. Verfahren nach Anspruch 10, **dadurch gekennzeichnet, dass** die Messküvette (2) als Reaktionsbehälter eingesetzt wird, in dem Reaktionen für die Bestimmung klinisch-chemischer Parameter und/oder für die Bestimmung immundiagnostischer Parameter ablaufen.

12. Verfahren nach Anspruch 10 oder 11, **dadurch gekennzeichnet, dass** ein Reagenzienträger (15) eingesetzt wird, der als um eine Mittelachse rotierbarer Rotor ausgebildet ist, wobei sich die Aufnahmen (14) für die Reagenzienkassetten (2) in radialer Richtung erstrecken.

13. Verfahren nach einem der Ansprüche 10 bis 12, **dadurch gekennzeichnet, dass** die Reagenzbehälter (24; 25) und die Messküvette (3) in linearer Anordnung zusammengefasst sind, und dass die Messküvette (3) im Bereich einer Außenseite des Reagenzienträgers (15) angeordnet ist.

14. Verfahren nach einem der Ansprüche 10 bis 13, **dadurch gekennzeichnet, dass** eine Reagenzienkassette (2) eingesetzt wird, die einen Reaktionsbehälter (25) aufweist, der mit einem testspezifischen, vorformulierten Systemreagenz als Festphase vorbefüllt ist.

15. Verfahren nach einem der Anspruch 14, **dadurch gekennzeichnet, dass** die Bestimmung immundiagnostischer Parameter ein Umpipettieren von einem Reaktionsbehälter (25) in die Messküvette (2) umfasst, wodurch eine im Reaktionsbehälter (25) ablaufende Reaktion unmittelbar gestoppt wird.
